# EUROPEAN PATENT APPLICATION

(11) **EP 3 910 543 A2**
(43) Date of publication of application: **17.11.2021**
(21) Application number: 21197508.1
(22) Date of filing: 17.09.2021
(51) Int. Cl.: G06K 9/00, G06K 9/32, G06K 9/62

(54) **METHOD FOR TRAINING OBJECT DETECTION MODEL, OBJECT DETECTION METHOD AND RELATED APPARATUS**

(30) Priority: 02.03.2021 CN 202110231549
(71) Applicant: BEIJING BAIDU NETCOM SCIENCE TECHNOLOGY CO., LTD., No.10 Shangdi 10th Street Haidian District Beijing 100085 (CN)
(72) Inventor: WANG, Xiaodi, Beijing, 100085 (CN); HAN, Shumin, Beijing, 100085 (CN); FENG, Yuan, Beijing, 100085 (CN); XIN, Ying, Beijing, 100085 (CN); ZHANG, Bin, Beijing, 100085 (CN); LONG, Xiang, Beijing, 100085 (CN); ZHENG, Honghui, Beijing, 100085 (CN); PENG, Yan, Beijing, 100085 (CN); JIA, Zhuang, Beijing, 100085 (CN)
(74) Representative: Jordan, Volker Otto Wilhelm

(57) **Abstract**

This application discloses an object detection model training method, object detection method and related apparatus, and relates to the field of artificial intelligence technologies such as computer vision, deep learning. A specific implementation includes: obtaining training sample data including a first remote sensing image and position annotation information of an anchor box of a subject to be detected in the first remote sensing image, where the position annotation information includes angle information of the anchor box relative to a preset direction; obtaining an object feature map of the first remote sensing image based on an object detection model, performing object detection on the subject to be detected based on the object feature map to obtain an object bounding box, and determining loss information between the anchor box and the object bounding box based on the angle information; updating a parameter of the object detection model based on the loss information. According to the technical solution of this application, such problem in the object detection technology as relatively low accuracy of object detection performed on the remote sensing image is solved, thus the accuracy of the object detection performed on the remote sensing image is improved.

## Description

### TECHNICAL FIELD

The present disclosure relates to the field of artificial intelligence technology, in particular to the field of computer vision and deep learning technologies, and the present disclosure relates specifically to a method for training an object detection model, an object detection method and related apparatus.

### BACKGROUND

With the advancement of deep learning technology, the computer vision technology has found more diverse applications in industrial scenarios. As a basis of the computer vision technology, an object detection method plays a key role in remote sensing and detection.

Conventionally, in a method for detecting an object in the remote sensing image, an anchor box without rotation angle is usually used as training data. A predicted anchor box is compared with a calibrated anchor box, and a regression function is trained to make the predicted anchor box close to the calibrated anchor box, so as to achieve model training.

### SUMMARY

A method for training an object detection model, an object detection method and related apparatus are provided in the present disclosure.

According to a first aspect of the present disclosure, a method for training an object detection model is provided, including: obtaining training sample data including a first remote sensing image and position annotation information of an anchor box of a subject to be detected in the first remote sensing image, where the position annotation information includes angle information of the anchor box relative to a preset direction; obtaining an object feature map of the first remote sensing image based on an object detection model, performing object detection on the subject to be detected based on the object feature map to obtain an object bounding box, and determining loss information between the anchor box and the object bounding box based on the angle information; and updating a parameter of the object detection model based on the loss information.

According to a second aspect of the present disclosure, an object detection method is provided, including: performing object detection on a second remote sensing image by using an object detection model trained through the method in the first aspect.

According to a third aspect of the present disclosure, an apparatus for training an object detection model is provided, including: a first obtaining module, configured to obtain training sample data including a first remote sensing image and position annotation information of an anchor box of a subject to be detected in the first remote sensing image, where the position annotation information includes angle information of the anchor box relative to a preset direction; a second obtaining module, configured to obtain an object feature map of the first remote sensing image based on an object detection model; a first object detection module, configured to perform object detection on the subject to be detected based on the object feature map to obtain an object bounding box; a determining module, configured to determine loss information between the anchor box and the object bounding box based on the angle information; and an updating module, configured to update a parameter of the object detection model based on the loss information.

According to a fourth aspect of the present disclosure, an object detection apparatus is provided, including a second object detection module, configured to perform object detection on a second remote sensing image by using the object detection model trained through the method in the first aspect.

According to a fifth aspect of the present disclosure, an electronic device is provided, including: at least one processor; and a memory in communication connection with the at least one processor. The memory has instructions executable by the at least one processor stored therein, and the instructions, when executed by the at least one processor, cause the at least one processor to implement the method in the first aspect, or the method in the second aspect.

According to a sixth aspect of the present disclosure, a non-transitory computer-readable storage medium having stored thereon computer instructions is provided, where the computer instructions are configured to be executed to cause a computer to implement the method in the first aspect, or the method in the second aspect.

According to a seventh aspect of the present disclosure, a computer program product is provided, including a computer program, where the computer program is configured to be executed by a processor to implement the method in the first aspect, or the method in the second aspect.

According to the technical solution of the present application, such problem in the object detection technology as relatively low accuracy of object detection performed on the remote sensing image is solved, thus the accuracy of the object detection performed on the remote sensing image is improved.

It should be appreciated that the content described in this section is not intended to identify key or important features of the embodiments of the present disclosure, nor is it intended to limit the scope of the present disclosure. Other features of the present disclosure are easily understood based on the following description.

### BRIEF DESCRIPTION OF THE DRAWINGS

The accompanying drawings are used for better understanding of solutions, but shall not be construed as limiting the present application. In these drawings,
Fig. 1 is a flow chart illustrating a method for training an object detection model according to a first embodiment of the present application;
Fig. 2 is a schematic diagram of an anchor box of a subject to be detected in a remote sensing image;
Fig. 3 is a schematic structural diagram of an apparatus for training an object detection model according to a third embodiment of the present application;
Fig. 4 is a schematic structural diagram of an object detection apparatus according to a fourth embodiment of the present application;
Fig. 5 is a schematic block diagram of an exemplary electronic device 500 configured to implement embodiments of the present disclosure.

### DETAILED DESCRIPTION

The following describes exemplary embodiments of the present application with reference to accompanying drawings. Various details of the embodiments of the present application are included to facilitate understanding, and should be considered as being merely exemplary. Therefore, those of ordinary skill in the art should be aware that various changes and modifications may be made to the embodiments described herein without departing from the scope and spirit of the present application. Likewise, for clarity and conciseness, descriptions of well-known functions and structures are omitted below.

### First Embodiment

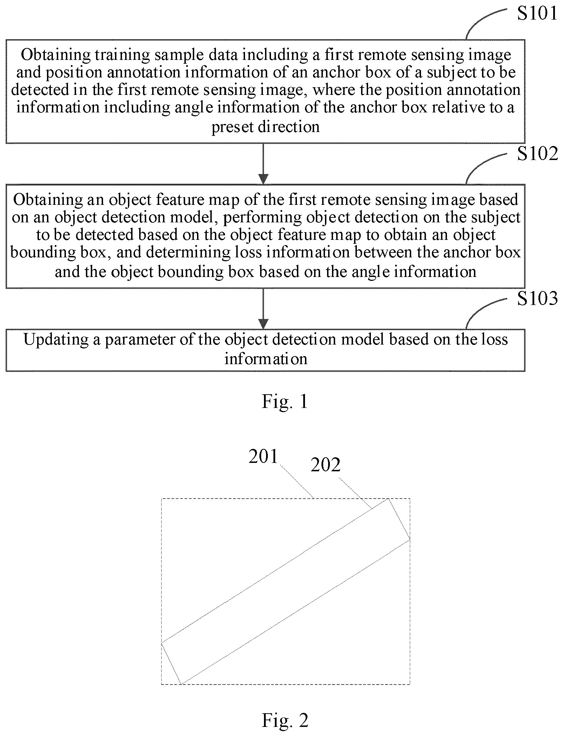

As shown in Fig. 1, a method for training an object detection model is provided in the present application. The method includes the following steps S101, S102 and S103.

Step S101, obtaining training sample data including a first remote sensing image and position annotation information of an anchor box of a subject to be detected in the first remote sensing image, where the position annotation information including angle information of the anchor box relative to a preset direction.

In the embodiment, the method for training the object detection model relates to the field of artificial intelligence technologies such as computer vision and deep learning, and may be widely applied in remote sensing and detection scenarios. The method may be implemented by an apparatus for training an object detection model in the embodiment of the present application. The apparatus for training the object detection model may be deployed in any electronic device to implement the method for training the object detection model in the embodiment of the present application. The electronic device may be a server or a terminal, which will not be particularly defined herein.

The training sample data is data used to train the object detection model, and includes a plurality of remote sensing images and annotation information of the subject to be detected in each remote sensing image. The annotation information includes position annotation information of the anchor box of the subject to be detected and classification annotation information of the subject to be detected in the remote sensing image.

The remote sensing image may be an image obtained through an electromagnetic radiation characteristic signal of a ground object detected by a sensor mounted on, for example, an artificial satellite or aerial photography aircraft. The anchor box refers to a bounding box defining the subject to be detected in the remote sensing image, is used to specify a position of the subject to be detected in the remote sensing image, and may be of a rectangular, square or another shape.

The subject to be detected refers to an image content relative to a background in the remote sensing image, may be called as a foreground, and may be an object, such as an aircraft or a ship. The embodiment of the present application aims to detect a foreground image region in the remote sensing image and classify the foreground. In addition, there may be one or more subjects to be detected in the first remote sensing image, such as multiple aircrafts or multiple ships.

The position annotation information of the anchor box of the subject to be detected may include the angle information of the anchor box relative to the preset direction, and the preset direction may generally be a horizontal direction. As shown in Fig. 2, in the related art, the anchor box is usually a bounding box 201 without a rotation angle. The bounding box determined by this kind of anchor box is a circumscribed bounding box of the subject to be detected. When the subject to be detected such as an aircraft or a ship is in an oblique state, an area determined from this kind of anchor box is usually quite different from a true area of the subject to be detected.

In some application scenarios, an aspect ratio of the subject to be detected is relatively large, and is relatively sensitive to the orientation. There may be a certain angle of the subject to be detected relative to the horizontal direction in the remote sensing image. Therefore, there is also a certain angle of the anchor box 202 as shown in Fig. 2 relative to the horizontal direction. The angle information of the subject to be detected, i.e., the angle *θ* of the subject to be detected relative to the horizontal direction, is calibrated, so as to provide more accurate position calibration of the subject to be detected in the remote sensing image, and to improve a training effect of the object detection model.

The position annotation information of the anchor box of the subject to be detected in the first remote sensing image may be manually annotated, and a four-point annotation method may be used. Position annotation may be performed on four vertices of the subject to be detected in a clockwise or counterclockwise direction. A regional location of the subject to be detected may be determined from annotated coordinates of the four vertices. In addition, the position annotation information of the anchor box of the subject to be detected in the first remote sensing image that is sent by other devices may be obtained.

Apart from the angle information, the position annotation information of the anchor box of the subject to be detected may further include information such as coordinates of a center point, a length and a width of the anchor box. The regional location of the subject to be detected in the remote sensing image may be determined collectively from such information.

The classification annotation information of the subject to be detected is information indicating what kind of object the subject to be detected is, e.g., an aircraft or a ship.

Step S102, obtaining an object feature map of the first remote sensing image based on an object detection model, performing object detection on the subject to be detected based on the object feature map to obtain an object bounding box, and determining loss information between the anchor box and the object bounding box based on the angle information.

The object detection model is used in object detection performed on the remote sensing image, that is, after the remote sensing image is inputted, the object detection model may output a detection result, including a regional location and classification of the subject, of the remote sensing image.

The object detection model may be a one-stage object detection model. The one-stage object detection model includes a RetinaNet network, which may be divided into two parts, namely, a backbone network, classification and regression sub-networks. The backbone network is used in feature extraction performed on the remote sensing image.

Optionally, a network of a feature pyramid structure, also called as a feature pyramid network (FPN), may be used as the backbone network in the RetinaNet network. The FPN network may enhance a feature extraction capability of a convolutional neural network due to a top-down pathway and lateral connections in the FPN, and may effectively construct a multi-scale feature pyramid from a single-resolution input image. Each layer of the feature pyramid may be used to detect objects of different scales, which greatly improves the stability of the network over features of different scales.

The object feature map may include feature data of the first remote sensing image, and is used in object detection performed on the subject to be detected. The object feature map may be multi-channel feature data, and a size of the feature data and data of a channel may be determined by a specific structure of the feature extraction network.

The FPN network may be used to perform feature extraction on the first remote sensing image, to obtain the object feature map of the first remote sensing image. Or, a feature optimization network may be added on the basis of the RetinaNet network. Feature optimization may be performed on a feature map outputted by the backbone network by using the feature optimization network, so as to obtain the object feature map. Next, object detection is performed on the subject to be detected based on the object feature map outputted by the feature optimization network. As for how to perform feature optimization by using the feature optimization network, a detail description will be given in the following embodiments.

Each layer of the FPN network or the feature optimization network is connected to a classification and regression sub-network. The classification and regression sub-networks may have a same structure, but weight parameters of variables thereof may be different. The classification and regression sub-networks are used to perform object detection on the subject to be detected based on the object feature map, so as to obtain the object bounding box and classification information of the subject to be detected. The object bounding box is the detected regional location of the subject to be detected.

In a detection process of the object bounding box, such a technique as region of interest may be used in the classification and regression sub-network to predict and obtain, based on the object feature map, multiple bounding boxes of the subject to be detected, as well as parameter information of the obtained multiple bounding boxes. The parameter information may include one of or any combination of a length, a width, coordinates of a center point and an angle of the bounding box.

Meanwhile, a foreground segmentation result of the first remote sensing image may be obtained based on the object feature map, where the foreground segmentation result includes indication information indicating whether each pixel in a plurality of pixels of the first remote sensing image belongs to the foreground. The indication information includes a probability that each pixel of the first remote sensing image belongs to the foreground and/or the background. That is, the foreground segmentation result provides a pixel-level prediction result.

Multiple bounding boxes of the subject to be detected are mapped to the foreground segmentation result. The better the bounding box fits a contour of the subject to be detected, the closer is the bounding box to overlap the foreground image region corresponding to the foreground segmentation result. Therefore, the larger an overlapping region between a bounding box in the multiple bounding boxes and the foreground image region is, in other words, the closer is the bounding box to overlap the foreground image region, the better the bounding box fits the contour of the subject to be detected, and the more accurate the prediction result of the bounding box is.

Correspondingly, the bounding box, whose overlapping region with the foreground image region is larger than a preset threshold, of the multiple bounding boxes may be determined as the object bounding box of the subject to be detected. It should be appreciated by those skilled in the art that a specific value of the preset threshold is not particularly defined in the embodiments of present application, and may be determined according to actual needs. There may be one or more object bounding boxes, and a number of the object bounding boxes corresponds to a number of subjects to be detected, and each subject to be detected may correspond to one object bounding box.

For example, the multiple bounding boxes are a bounding box A, a bounding box B and a bounding box C. By mapping the three bounding boxes to the foreground segmentation result, a ratio of an overlapping region between each bounding box and the foreground image region to the entire bounding box may be calculated. For example, for bounding box A, the ratio is 95%, for bounding box B, the ratio is 85%, and for bounding box C, the proportion is 60%. When the preset threshold is set to 80%, the possibility that the bounding box C is the object bounding box is excluded.

In addition, when there are multiple object bounding boxes, there may be object bounding boxes overlapping each other, that is, the overlapping object bounding boxes correspond to a same subject to be detected. In this case, one of two bounding boxes having an overlapping region greater than a certain threshold may be removed, and the removed one of two bounding boxes may be the bounding box having a smaller overlapping region with the foreground image region.

For example, the first remote sensing image includes only one subject to be detected, such as a ship, and the determined object bounding box includes the bounding box A and the bounding box B. The overlapping region between the bounding box A and the bounding box B is greater than a certain threshold, and a ratio of the overlapping region between the bounding box B and the foreground image region to the bounding box B is smaller than a ratio of the overlapping region between the bounding box A and the foreground image region to the bounding box A. Thus, the bounding box B is removed, and finally the object bounding box is bounding box A.

Next, the loss information between the anchor box and the object bounding box may be determined based on the angle information. The loss information is a difference between a regional location defined by the anchor box and a regional location defined by the object bounding box.

A difference between the anchor box and the object bounding box may be determined by using an index of Intersection of Union (IOU). IOU refers to an overlapping rate between the anchor box and the object bounding box, i.e., a ratio of an intersection of the anchor box and the object bounding box to a union of the anchor box and the object bounding box. An ideal case is that the anchor box fully overlaps the object bounding box, that is, the ratio is 1, at this time, the loss information is zero.

However, in actual situations, a detection box, i.e., the detected object bounding box, is unlikely to fully overlap the anchor box, that is, there is a loss between the detected object bounding box and the anchor box. The larger an overlapping parameter is, the smaller the loss information therebetween is. The smaller the overlapping parameter is, the greater the loss information therebetween is. Moreover, in a case that the aspect ratio of the subject to be detected is relatively large, and the subject to be detected is in an oblique state, an error of the calculated IOU is very large due to a difference in area between the object bounding box and the subject to be detected. Correspondingly, an error of the loss information determined by using the IOU is also relatively large, which leads to the deterioration of the effect of model training and the reduction of the accuracy of object detection.

In this application scenario, the IOU between the anchor box and the object bounding box may be determined first, and then the loss information between the anchor box and the object bounding box may be determined according to the IOU in combination with the angle information of the anchor box.

To be specific, angle information of the object bounding box relative to the preset direction may be determined based on coordinate information of the object bounding box (the coordinate information may be coordinates of a center point and four vertices of the object bounding box). An angle between the anchor box and the object bounding box may be determined based on the angle information of the anchor box relative to the preset direction and the angle information of the object bounding box relative to the preset direction. The overlapping parameter between the anchor box and the object bounding box may be determined based on the angle between the anchor box and the object bounding box, and the IOU between the anchor box and the object bounding box. Finally the loss information between the anchor box and the object bounding box may be determined based on the overlap parameter.

In an example, a normalized value obtained by dividing the IOU by the angle may be determined as the overlap parameter between the anchor box and the object bounding box. That is, in the case that the IOU is fixed, the overlap parameter decreases as the angle between the anchor box and the object bounding box increases. Correspondingly, since the loss information is inversely proportional to the overlapping parameter, the loss information increases as the angle between the anchor box and the object bounding box increases. That is, the greater the angle, the greater the loss information.

At the same time, after the loss information between the anchor box and the object bounding box is determined, loss information between the classification annotation information of the subject to be detected and detected classification information of the subject to be detected may be determined. The loss information and the loss information between the anchor box and the object bounding box jointly constitutes loss information of the object detection model.

In addition, in order to solve the problem of imbalance caused by a relatively large difference between a number of objects and a number of categories in the object detection model, a focal loss function may be used to determine the loss information of the object detection model, so as to greatly improve the performance of the object detection model in a one-stage detector.

Step S103, updating a parameter of the object detection model based on the loss information.

Parameters of the object detection model may be updated based on the loss information between the anchor box and the object bounding box. More specifically, the parameters of the object detection model may be updated based on a sum value of the loss information and the loss information between the classification annotation information of the subject to be detected and the detected classification information of the subject to be detected.

In an example, the parameters of the object detection model may be adjusted by using a gradient back propagation method. During training, first remote sensing images in the training sample data may be sequentially inputted to the object detection model, and the parameters of the object detection model are adjusted based on the sum value of the loss information back propagated to the object detection model during each iteration. In a case that the sum value of the loss information decreases to a certain threshold, or a predetermined number of iterations are completed, the updating of the parameters of the object detection model is finished, that is, the training of the object detection model is finished.

In the embodiment, the angle information of the subject to be detected in the remote sensing image is added when processing the training sample data, and the angle information is regressed during the training process, thereby the training effect of the object detection model is greatly improved, enabling the object detection model to be applied to objects with different angles in the remote sensing image, and improving the accuracy of object detection.

Optionally, the angle information is determined in the following manner: obtaining a coordinate sequence of vertices of the subject to be detected in the first remote sensing image, the coordinate sequence being a sequence in which coordinates of the vertices of the subject to be detected are arranged in a target clock revolution order; and determining, based on the coordinate sequence, the angle information of the anchor box of the subject to be detected in the first remote sensing image relative to the preset direction.

In the embodiment, in a data annotation stage, data calibration may be performed by using the four-point annotation method, which is different from the commonly used method where calibration of the anchor box of each object in the remote sensing image is performed by using the coordinates of the center point, the width and the height of the anchor box. In a detection scheme for object with a rotation angle, calibration of the coordinates of four vertices of the anchor box is beneficial to more accurate localization of multiple categories of objects with an angle in complex scenarios.

The four vertices of the subject to be detected may be calibrated sequentially according to the target clock revolution order, such as a clockwise order. In order to cope with inconsistency in presentation of different orientation information of different categories of objects, for the orientation-sensitive object such as aircraft or ship, a head point of the subject to be detected (the nose of the aircraft or the bow of the ship) may be used as a starting point, and calibration is performed sequentially in accordance with the clockwise order, so as to obtain the coordinate sequence.

During data preprocessing, the coordinate sequence of the four vertices may be used in calculation to obtain the position annotation information of the anchor box, including the coordinates of the center point, the length, the width and the angle information of the anchor box, which will be inputted to the object detection model for model training.

In the embodiment, the coordinates of the four vertices of the subject to be detected in the first remote sensing image are annotated by using the four-point annotation method, so as to obtain the coordinate sequence. Thus, based on the coordinate sequence, the angle information of the anchor box of the to-be-detected in the first remote sensing image relative to the preset direction may be determined, which is simple and effective.

Optionally, the determining the loss information between the anchor box and the object bounding box based on the angle information includes: determining an Intersection of Union (IOU) between the anchor box and the object bounding box; and determining the loss information between the anchor box and the object bounding box based on the IOU and the angle information.

In the embodiment, the IOU refers to the overlapping rate between the anchor box and the object bounding box, i.e., the ratio of the intersection of the anchor box and the object bounding box to the union of the anchor box and the object bounding box. The IOU between the anchor box and the object bounding box may be determined by using an existing or new IOU calculation mode.

Next, based on the coordinate information of the object bounding box (the coordinate information may be the coordinates of the center point and the four vertices of the object bounding box), the angle information of the object bounding box relative to the preset direction may be determined. The angle between the anchor box and the object bounding box may be determined based on the angle information of the anchor box relative to the preset direction and the angle information of the object bounding box relative to the preset direction. The overlapping parameter between the anchor box and the object bounding box may be determined based on the angle between the anchor box and the object bounding box, and the IOU between the anchor box and the object bounding box. Finally the loss information between the anchor box and the object bounding box may be determined based on the overlap parameter.

In an example, a normalized value obtained by dividing the IOU by the angle may be determined as the overlap parameter between the anchor box and the object bounding box. That is, in the case that the IOU is fixed, the overlap parameter decreases as the angle between the anchor box and the object bounding box increases. Correspondingly, since the loss information is inversely proportional to the overlapping parameter, the loss information increases as the angle between the anchor box and the object bounding box increases. That is, the greater the angle, the greater the loss information.

In the embodiment, the loss information between the anchor box and the object bounding box is determined based on the IOU and the angle information, and the greater the angle between the anchor box and the object bounding box, the greater the loss information. In this way, the accuracy of determination of the network loss of the object detection model may be improved, and the regression effect of the object detection model may be improved.

Optionally, the obtaining the object feature map of the first remote sensing image based on the object detection model includes: inputting the training sample data to the object detection model and performing following operations to obtain the object feature map of the first remote sensing image: performing feature extraction on the first remote sensing image to obtain a feature map of the first remote sensing image, the feature map including a first feature point and a first feature vector corresponding to the first feature point; determining an object candidate bounding box corresponding to the first feature point based on the feature map; and reconstructing the feature map based on the object candidate bounding box and the first feature vector to obtain the object feature map, the object feature map including a second feature point and a second feature vector corresponding to the second feature point that are determined based on the object candidate bounding box.

Conventionally, when classification and regression is performed on the feature map outputted by the backbone network during each iteration, a same feature map is usually used for classification and regression tasks, without considering a problem of feature misalignment caused by the position change of a confidence box, i.e., the object bounding box having a relatively high confidence score. The problem of feature misalignment caused by the position change of the confidence box refers to that an angle of the confidence box usually changes for each iteration, while features of the feature map do not change accordingly, resulting in that a feature in the feature map and the position of the confidence box are not aligned.

In the embodiment, the feature optimization network may be added on the basis of the RetinaNet network. Feature optimization may be performed on the feature map outputted by the backbone network by using the feature optimization network, so as to obtain the object feature map. Correspondingly, the feature optimization network may be connected to the classification and regression sub-network, so that the object feature map outputted by the feature optimization network may be inputted to the classification and regression sub-network for classification and regression tasks.

A goal of the feature optimization network is to address the problem of feature misalignment caused by the position change of the confidence box. To be specific, position information of the object bounding box may be recoded as the corresponding feature points in the feature map, so as to reconstruct the entire feature map, thereby realizing the feature alignment.

To be specific, the training sample data may be inputted to the object detection model to implement corresponding operations. The object detection model may adopt the FPN network to perform feature extraction on the first remote sensing image, to obtain the feature map of the first remote sensing image. The feature map may include one or more first feature points, and a first feature vector corresponding to each first feature point. The number of first feature points in the feature map may be determined in accordance with the number of subjects to be detected. Generally, one feature point may correspond to the regional location of one subject to be detected on the first remote sensing image.

Multiple candidate bounding boxes corresponding to the first feature points, including parameter information of obtained multiple candidate bounding boxes, may be predicted and obtained based on the feature map by using such a technique as region of interest. The parameter information may include one of or any combination of the length, the width, the coordinates of the center point and the angle of the candidate bounding box.

Meanwhile, the foreground segmentation result of the first remote sensing image may be obtained based on the feature map, and the foreground segmentation result includes the indication information indicating whether each pixel of the plurality of pixels of the first remote sensing image belongs to the foreground. The indication information includes the probability that each pixel of the first remote sensing image belongs to the foreground and/or the background. That is, the foreground segmentation result provides the pixel-level prediction result.

For each first feature point, the multiple candidate bounding boxes of the first feature point are mapped to the foreground segmentation result. The better the candidate bounding box fits the contour of the subject to be detected, the closer is the candidate bounding box to overlap the foreground image region corresponding to the foreground segmentation result, and correspondingly, the higher the confidence coefficient of the candidate bounding box is. Therefore, the larger an overlapping region between the candidate bounding box in the multiple candidate bounding boxes and the foreground image region is, in other words, the closer is the candidate bounding box to overlap the foreground image region, the higher the confidence coefficient is, i.e., the better the candidate bounding box fits the contour of the subject to be detected, and the more accurate the prediction result of the candidate bounding box is.

Correspondingly, for each first feature point, the candidate bounding box, whose overlapping region with the foreground image region is the largest, of the multiple candidate bounding boxes corresponding to the first feature point may be determined as the object candidate bounding box corresponding to the first feature point. That is, the candidate bounding box with the highest confidence coefficient corresponding to each first feature point is retained. In this way, the processing speed may be improved, while it can be ensured that each first feature point corresponds to only one refined candidate bounding box.

Next, for each first feature point, the feature map may be reconstructed based on the object candidate bounding box and the first feature vector, to obtain the object feature map. More specifically, corresponding vector information may be obtained from the feature map based on the position information of the object candidate bounding box, and the first feature vector corresponding to the first feature point may be replaced based on the vector information, so as to recode the position information of the object candidate bounding box as corresponding feature points in the feature map, to reconstruct the entire feature map, thereby achieving the feature alignment. The feature map may be added by using bidirectional convolution, and the first feature vector corresponding to the first feature point is replaced with the vector information, so as to obtain a new feature.

In the reconstructed feature map, a position of the feature point does not change, that is, a regional location of the object candidate bounding box does not change, but the feature vector corresponding to the feature point and representing the position information of the subject to be detected changes with the position information of the object candidate bounding box, thus, the problem of feature misalignment caused by the position change of the confidence box is solved, and the feature alignment is achieved.

In the embodiment, the training sample data is inputted to the object detection model for performing feature alignment, thus the problem of feature misalignment caused by the position change of the confidence box may be solved and the feature alignment may be achieved. Thus, the training effect of the object detection model may be further improved, and the accuracy of object detection may be further improved.

Optionally, the determining the object candidate bounding box corresponding to the first feature point based on the feature map includes: determining N candidate bounding boxes corresponding to the first feature point based on the feature map, where N is a positive integer; obtaining a candidate bounding box having a highest confidence coefficient in the N candidate bounding boxes as the object candidate bounding box.

In the embodiment, multiple candidate bounding boxes corresponding to the first feature points, including parameter information of obtained multiple candidate bounding boxes, may be predicted and obtained based on the feature map by using such a technique as region of interest. The parameter information may include one of or any combination of the length, the width, the coordinates of the center point and the angle of the candidate bounding box.

Meanwhile, the foreground segmentation result of the first remote sensing image may be obtained based on the feature map, and the foreground segmentation result includes the indication information indicating whether each pixel of the plurality of pixels of the first remote sensing image belongs to the foreground. The indication information includes the probability that each pixel of the first remote sensing image belongs to the foreground and/or the background. That is, the foreground segmentation result provides the pixel-level prediction result.

For each first feature point, the multiple candidate bounding boxes of the first feature point are mapped to the foreground segmentation result. The better the candidate bounding box fits the contour of the subject to be detected, the closer is the candidate bounding box to overlap the foreground image region corresponding to the foreground segmentation result, and correspondingly, the higher the confidence coefficient of the candidate bounding box is. Therefore, the larger an overlapping region between the candidate bounding box in the multiple candidate bounding boxes and the foreground image region is, in other words, the closer is the candidate bounding box to overlap the foreground image region, the higher the confidence coefficient is, i.e., the better the candidate bounding box fits the contour of the subject to be detected, and the more accurate the prediction result of the candidate bounding box is.

Correspondingly, for each first feature point, the candidate bounding box, whose overlapping region with the foreground image region is the largest, of the multiple candidate bounding boxes corresponding to the first feature point may be determined as the object candidate bounding box corresponding to the first feature point. That is, the candidate bounding box with the highest confidence coefficient corresponding to each first feature point is retained. In this way, the processing speed may be improved, while it can be ensured that each first feature point corresponds to only one refined candidate bounding box.

Optionally, the feature map further includes a third feature vector corresponding to position information of the object candidate bounding box; and the reconstructing the feature map based on the object candidate bounding box and the first feature vector to obtain the object feature map includes: reconstructing the feature map based on the first feature vector and the third feature vector to obtain the object feature map.

In the embodiment, for each first feature point, the corresponding third vector information may be obtained from the feature map based on the position information of the object candidate bounding box, and the first vector corresponding to the first feature point may be replaced based on the third vector information, so as to recode the position information of the object candidate bounding box as the corresponding feature points in the feature map, and reconstruct the entire feature map, thereby to achieve the feature alignment. The feature map may be added by using bidirectional convolution, and the first feature vector corresponding to the first feature point may be replaced with the third vector information, so as to obtain the new feature.

The position information of the object candidate bounding box may be represented by the coordinates of the center point and four vertices of the object candidate bounding box. After traversing all the first feature points, the corresponding third feature vectors may be found on the feature map based on the position information of the object candidate bounding box, and the entire feature map may be reconstructed based on the found third feature vectors to obtain the object feature map. In the object feature map, the position of the confidence box is aligned with the feature.

Optionally, the reconstructing the feature map based on the first feature vector and the third feature vector to obtain the object feature map includes: determining K feature vectors corresponding to the third feature vector, the second feature vector including the K feature vectors, where K is a positive integer greater than 1; using the first feature point as the second feature point, and replacing the first feature vector in the feature map with the K feature vectors to obtain the object feature map.

In the embodiment, more accurate feature information representing the position of the object candidate bounding box, i.e., the K feature vectors corresponding to the third feature vector, may be obtained based on the third feature vector by using a bilinear interpolation method, where K is a positive integer greater than 1.

To be specific, the third feature vector may be interpolated within an angle range, such as 0 degree to 180 degrees, by using the bilinear interpolation method to obtain the K feature vectors, such as five feature vectors, corresponding to the third feature vector. The greater the K, the more accurate the representation of position feature information of the object candidate bounding box is.

Next, the first feature point is used as the second feature point, and the first feature vector in the feature map is replaced with the K feature vectors, so as to reconstruct the entire feature map, thereby to obtain the object feature map.

In the embodiment, multiple feature vectors may be obtained based on the third feature vector by using the bilinear interpolation method. In this way, the position feature information of the object candidate bounding box may have multiple dimensions, and the accuracy of the position representation of the object candidate bounding box may be improved, so as to improve the feature alignment effect of the object feature map, and further improve the training effect of the object detection model.

### Second Embodiment

An object detection method is provided, including: performing object detection on a second remote sensing image by using an object detection model.

The second remote sensing image may be a remote sensing image to be detected, and the object detection method aims to detect, based on the object detection model, a regional location and classification information of a subject to be detected in the second remote sensing image.

The object detection model may be the object detection model trained based on the method for training the object detection model in the first embodiment, and the method for training the object detection model includes: obtaining training sample data including a first remote sensing image and position annotation information of an anchor box of a subject to be detected in the first remote sensing image, and the position annotation information including angle information of the anchor box relative to a preset direction; obtaining an object feature map of the first remote sensing image based on an object detection model, performing object detection on the subject to be detected based on the object feature map to obtain an object bounding box, and determining loss information between the anchor box and the object bounding box based on the angle information; and updating a parameter of the object detection model based on the loss information.

Optionally, the angle information is determined in the following manner: obtaining a coordinate sequence of vertices of the subject to be detected in the first remote sensing image, the coordinate sequence being a sequence in which coordinates of the vertices of the subject to be detected are arranged in a target clock revolution order; and determining, based on the coordinate sequence, the angle information of the anchor box of the subject to be detected in the first remote sensing image relative to the preset direction.

Optionally, the determining the loss information between the anchor box and the object bounding box based on the angle information includes: determining an Intersection of Union (IOU) between the anchor box and the object bounding box; and determining the loss information between the anchor box and the object bounding box based on the IOU and the angle information.

Optionally, the obtaining the object feature map of the first remote sensing image based on the object detection model includes: inputting the training sample data to the object detection model and performing following operations to obtain the object feature map of the first remote sensing image: performing feature extraction on the first remote sensing image to obtain a feature map of the first remote sensing image, the feature map including a first feature point and a first feature vector corresponding to the first feature point; determining an object candidate bounding box corresponding to the first feature point based on the feature map; and reconstructing the feature map based on the object candidate bounding box and the first feature vector to obtain the object feature map, the object feature map including a second feature point and a second feature vector corresponding to the second feature point that are determined based on the object candidate bounding box.

Optionally, the determining the object candidate bounding box corresponding to the first feature point based on the feature map includes: determining N candidate bounding boxes corresponding to the first feature point based on the feature map, where N is a positive integer; obtaining a candidate bounding box having a highest confidence coefficient in the N candidate bounding boxes as the object candidate bounding box.

Optionally, the feature map further includes a third feature vector corresponding to position information of the object candidate bounding box; and the reconstructing the feature map based on the object candidate bounding box and the first feature vector to obtain the object feature map includes: reconstructing the feature map based on the first feature vector and the third feature vector to obtain the object feature map.

Optionally, the reconstructing the feature map based on the first feature vector and the third feature vector to obtain the object feature map includes: determining K feature vectors corresponding to the third feature vector, the second feature vector including the K feature vectors, where K is a positive integer greater than 1; using the first feature point as the second feature point, and replacing the first feature vector in the feature map with the K feature vectors to obtain the object feature map.

According to the embodiment of the present disclosure, object detection is performed on the second remote sensing image by using the object detection model obtained through the training method in the first embodiment, so as to improve the object detection accuracy.

### Third Embodiment

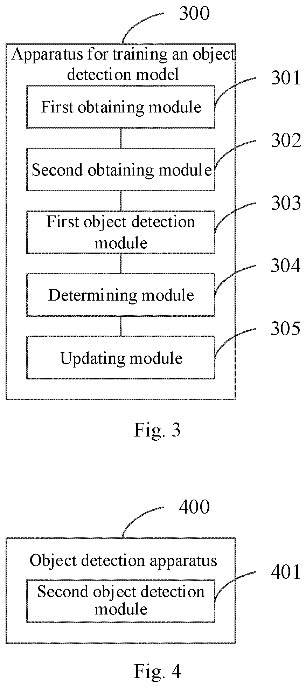

As shown in Fig. 3, an apparatus 300 for training an object detection model is provided, including: a first obtaining module 301, configured to obtain training sample data including a first remote sensing image and position annotation information of an anchor box of a subject to be detected in the first remote sensing image, where the position annotation information includes angle information of the anchor box relative to a preset direction; a second obtaining module 302, configured to obtain an object feature map of the first remote sensing image based on an object detection model; a first object detection module 303, configured to perform object detection on the subject to be detected based on the object feature map to obtain an object bounding box; a determining module 304, configured to determine loss information between the anchor box and the object bounding box based on the angle information; and an updating module 305, configured to update a parameter of the object detection model based on the loss information.

Optionally, the angle information is determined in the following manner: obtaining a coordinate sequence of vertices of the subject to be detected in the first remote sensing image, the coordinate sequence being a sequence in which coordinates of the vertices of the subject to be detected are arranged in a target clock revolution order; and determining, based on the coordinate sequence, the angle information of the anchor box of the subject to be detected in the first remote sensing image relative to the preset direction.

Optionally, the determining module 304 is further configured to determine an Intersection of Union (IOU) between the anchor box and the object bounding box; and determine the loss information between the anchor box and the object bounding box based on the IOU and the angle information.

Optionally, the second obtaining module 302 is further configured to input the training sample data to the object detection model and perform following operations to obtain the object feature map of the first remote sensing image: performing feature extraction on the first remote sensing image to obtain a feature map of the first remote sensing image, the feature map including a first feature point and a first feature vector corresponding to the first feature point; determining an object candidate bounding box corresponding to the first feature point based on the feature map; and reconstructing the feature map based on the object candidate bounding box and the first feature vector to obtain the object feature map, the object feature map including a second feature point and a second feature vector corresponding to the second feature point that are determined based on the object candidate bounding box.

Optionally, the second obtaining module 302 is further configured to determine N candidate bounding boxes corresponding to the first feature point based on the feature map, where N is a positive integer; and obtain a candidate bounding box having a highest confidence coefficient in the N candidate bounding boxes as the object candidate bounding box.

Optionally, the feature map further includes a third feature vector corresponding to position information of the object candidate bounding box; and the second obtaining module 302 includes: a reconstruction unit, configured to reconstruct the feature map based on the first feature vector and the third feature vector to obtain the object feature map.

Optionally, the reconstruction unit is further configured to: determine K feature vectors corresponding to the third feature vector, the second feature vector including the K feature vectors, where K is a positive integer greater than 1; and use the first feature point as the second feature point, and replace the first feature vector in the feature map with the K feature vectors to obtain the object feature map.

The apparatus 300 for training the object detection model in the present application may implement each process implemented by the embodiments of the method for training the object detection model, and achieve same beneficial effects. To avoid repetition, details are not described herein again.

### Fourth Embodiment

As shown in Fig. 4, an object detection apparatus 400 is provided, including a second object detection module 401, where the second object detection module 401 is configured to perform object detection on a second remote sensing image by using the object detection model trained through the method in the first embodiment.

The object detection apparatus 400 in the present application may implement each process implemented by the embodiments of the object detection method, and achieve same beneficial effects. To avoid repetition, details are not described herein again.

According to embodiments of the present application, an electronic device, a readable storage medium and a computer program product are further provided.

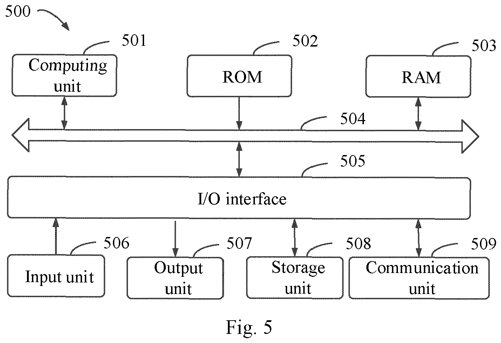

Fig. 5 shows a block diagram of an exemplary electronic device 500 for implementing the embodiments of the present disclosure. The electronic device is intended to represent various forms of digital computers, such as laptop computers, desktop computers, workstations, personal digital assistants, servers, blade servers, mainframe computers, and other suitable computers. The electronic device may also represent various forms of mobile devices, such as personal digital assistant, cellular telephones, smart phones, wearable devices, and other similar computing devices. The components shown herein, their connections and relationships, and their functions are by way of example only and are not intended to limit the implementations of the present disclosure described and/or claimed herein.

As shown in Fig. 5, the electronic device 500 includes a computing unit 501, the computing unit 501 may perform various appropriate operations and processing according to a computer program stored in a read only memory (ROM) 502 or a computer program loaded from a storage unit 508 to a random access memory (RAM) 503. In the RAM 503, various programs and data required for the operation of the electronic device 500 may also be stored. The computing unit 501, the ROM 502 and the RAM 503 are connected to each other through a bus 504. An input/output (I/O) interface 505 is also connected to the bus 504.

A plurality of components in the electronic device 500 are connected to the I/O interface 505. The components include: an input unit 506, such as a keyboard or a mouse; an output unit 507, such as various types of displays or speakers; a storage unit 508, such as a magnetic disk or an optical disc; and a communication unit 509, such as a network card, a modem, or a wireless communication transceiver. The communication unit 509 allows the electronic device 500 to exchange information/data with other devices through a computer network such as the Internet and/or various telecommunication networks.

The computing unit 501 may be various general-purpose and/or dedicated processing components having processing and computing capabilities. Some examples of the computing unit 501 include, but are not limited to, a central processing unit (CPU), a graphic processing unit (GPU), various dedicated artificial intelligence (AI) computing chips, various computing units that run machine learning model algorithms, a digital signal processor (DSP), and any appropriate processor, controller, microcontroller, etc. The computing unit 501 performs the various methods and processing described above, such as the method for training the object detection model or the object detection method. For example, the method for training the object detection model or the object detection method may be implemented as a computer software program in some embodiments, which is tangibly included in a machine-readable medium, such as the storage unit 508. In some embodiments, a part or all of the computer program may be loaded and/or installed on the electronic device 500 through the ROM 502 and/or the communication unit 509. When the computer program is loaded into the RAM 503 and executed by the computing unit 501, one or more steps of the foregoing method for training the object detection model or the object detection method may be implemented. Optionally, in other embodiments, the computing unit 501 may be configured in any other suitable manner (for example, by means of firmware) to perform the method for training the object detection model or the object detection method.

Various embodiments of the systems and techniques described herein may be implemented in a digital electronic circuitry, an integrated circuit system, a field programmable gate array (FPGA), an application-specific integrated circuit (ASIC), an application-specific standard product (ASSP), a system on chip (SOC), a complex programmable logic device (CPLD), computer hardware, firmware, software, and/or a combination thereof. These various embodiments may include implementation in one or more computer programs that may be executed and/or interpreted on a programmable system including at least one programmable processor. The programmable processor may be a dedicated or general purpose programmable processor, may receive data and instructions from a storage system, at least one input device and at least one output device, and transmit data and instructions to the storage system, the at least one input device and the at least one output device.

Program codes used to implement the method of the present disclosure may be written in any combination of one or more programming languages. These program codes may be provided to the processor or controller of the general-purpose computer, the dedicated computer, or other programmable data processing devices, so that when the program codes are executed by the processor or controller, functions/operations specified in the flowcharts and/or block diagrams are implemented. The program codes may be run entirely on a machine, run partially on the machine, run partially on the machine and partially on a remote machine as a standalone software package, or run entirely on the remote machine or server.

In the context of the present disclosure, the machine readable medium may be a tangible medium, and may include or store a program used by an instruction execution system, device or apparatus, or a program used in conjunction with the instruction execution system, device or apparatus. The machine readable medium may be a machine readable signal medium or a machine readable storage medium. The machine readable medium may include, but is not limited to: an electronic, magnetic, optical, electromagnetic, infrared, or semiconductor system, device or apparatus, or any suitable combination thereof. A more specific example of the machine readable storage medium includes: an electrical connection based on one or more wires, a portable computer disk, a hard disk, a random access memory (RAM), a read only memory (ROM), an erasable programmable read only memory (EPROM or flash memory), an optic fiber, a portable compact disc read only memory (CD-ROM), an optical storage device, a magnetic storage device, or any suitable combination thereof.

To facilitate user interaction, the system and technique described herein may be implemented on a computer. The computer is provided with a display device (for example, a cathode ray tube (CRT) or liquid crystal display (LCD) monitor) for displaying information to a user, a keyboard and a pointing device (for example, a mouse or a track ball). The user may provide an input to the computer through the keyboard and the pointing device. Other kinds of devices may be provided for user interaction, for example, a feedback provided to the user may be any manner of sensory feedback (e.g., visual feedback, auditory feedback, or tactile feedback); and input from the user may be received by any means (including sound input, voice input, or tactile input).

The system and technique described herein may be implemented in a computing system that includes a back-end component (e.g., as a data server), or that includes a middle-ware component (e.g., an application server), or that includes a front-end component (e.g., a client computer having a graphical user interface or a Web browser through which a user can interact with an implementation of the system and technique), or any combination of such back-end, middleware, or front-end components. The components of the system can be interconnected by any form or medium of digital data communication (e.g., a communication network). Examples of communication networks include a local area network (LAN), a wide area network (WAN), the Internet and a blockchain network.

The computer system can include a client and a server. The client and server are generally remote from each other and typically interact through a communication network. The relationship of client and server arises by virtue of computer programs running on respective computers and having a client-server relationship to each other. The server may be a cloud server, also referred to as a cloud computing server or a cloud host, and is a host product in a cloud computing service system, so as to solve the defects such as a difficulty in management and weak service scalability in a conventional physical host and Virtual Private Server (VPS) service. The server may also be a server of a distributed system, or a server combined with a blockchain.

It should be appreciated, all forms of processes shown above may be used, and steps thereof may be reordered, added or deleted. For example, as long as expected results of the technical solutions of the present disclosure can be achieved, steps set forth in the present disclosure may be performed in parallel, performed sequentially, or performed in a different order, and there is no limitation in this regard.

The foregoing specific implementations constitute no limitation on the scope of the present disclosure. It is appreciated by those skilled in the art, various modifications, combinations, sub-combinations and replacements may be made according to design requirements and other factors. Any modifications, equivalent replacements and improvements made without deviating from the spirit and principle of the present disclosure shall be deemed as falling within the scope of the present disclosure.

## Claims

1. A method for training an object detection model, comprising:
obtaining training sample data, the training sample data comprising a first remote sensing image and position annotation information of an anchor box of a subject to be detected in the first remote sensing image, wherein the position annotation information comprises angle information of the anchor box relative to a preset direction;
obtaining an object feature map of the first remote sensing image based on an object detection model, performing object detection on the subject to be detected based on the object feature map to obtain an object bounding box, and determining loss information between the anchor box and the object bounding box based on the angle information; and
updating a parameter of the object detection model based on the loss information.

2. The method according to claim 1, wherein the angle information is determined in the following manner:
obtaining a coordinate sequence of vertices of the subject to be detected in the first remote sensing image, the coordinate sequence being a sequence in which coordinates of the vertices of the subject to be detected are arranged in a target clock revolution order; and
determining, based on the coordinate sequence, the angle information of the anchor box of the subject to be detected in the first remote sensing image relative to the preset direction.

3. The method according to claim 1, wherein the determining the loss information between the anchor box and the object bounding box based on the angle information comprises:
determining an Intersection of Union, IOU, between the anchor box and the object bounding box; and
determining, based on the IOU and the angle information, the loss information between the anchor box and the object bounding box.

4. The method according to claim 1, wherein the obtaining the object feature map of the first remote sensing image based on the object detection model comprises:
inputting the training sample data to the object detection model and performing following operations to obtain the object feature map of the first remote sensing image:
performing feature extraction on the first remote sensing image to obtain a feature map of the first remote sensing image, the feature map comprising a first feature point and a first feature vector corresponding to the first feature point;
determining, based on the feature map, an object candidate bounding box corresponding to the first feature point; and
reconstructing the feature map based on the object candidate bounding box and the first feature vector to obtain the object feature map, the object feature map comprising a second feature point and a second feature vector corresponding to the second feature point that are determined based on the object candidate bounding box.

5. The method according to claim 4, wherein the determining, based on the feature map, the object candidate bounding box corresponding to the first feature point comprises:
determining, based on the feature map, N candidate bounding boxes corresponding to the first feature point, where N is a positive integer;
obtaining a candidate bounding box having a highest confidence coefficient in the N candidate bounding boxes as the object candidate bounding box.

6. The method according to claim 4, wherein the feature map further comprises a third feature vector corresponding to position information of the object candidate bounding box;
the reconstructing the feature map based on the object candidate bounding box and the first feature vector to obtain the object feature map comprises:
reconstructing the feature map based on the first feature vector and the third feature vector to obtain the object feature map;
wherein the reconstructing the feature map based on the first feature vector and the third feature vector to obtain the object feature map comprises:
determining K feature vectors corresponding to the third feature vector, the second feature vector comprising the K feature vectors, where K is a positive integer greater than 1;
using the first feature point as the second feature point, and replacing the first feature vector in the feature map with the K feature vectors, to obtain the object feature map.

7. An object detection method, comprising: performing object detection on a second remote sensing image by using an object detection model trained through the method according to any one of claims 1 to 6.

8. An apparatus for training an object detection model, comprising:
a first obtaining module, configured to obtain training sample data, the training sample data comprising a first remote sensing image and position annotation information of an anchor box of a subject to be detected in the first remote sensing image, wherein the position annotation information comprises angle information of the anchor box relative to a preset direction;
a second obtaining module, configured to obtain an object feature map of the first remote sensing image based on an object detection model;
a first object detection module, configured to perform object detection on the subject to be detected based on the object feature map to obtain an object bounding box;
a determining module, configured to determine loss information between the anchor box and the object bounding box based on the angle information; and
an updating module, configured to update a parameter of the object detection model based on the loss information.

9. The apparatus according to claim 8, wherein the angle information is determined in the following manner:
obtaining a coordinate sequence of vertices of the subject to be detected in the first remote sensing image, the coordinate sequence being a sequence in which coordinates of the vertices of the subject to be detected are arranged in a target clock revolution order; and
determining, based on the coordinate sequence, the angle information of the anchor box of the subject to be detected in the first remote sensing image relative to the preset direction;
and/or,
wherein the determining module is further configured to: determine an Intersection of Union, IOU, between the anchor box and the object bounding box; and determine the loss information between the anchor box and the object bounding box based on the IOU and the angle information.

10. The apparatus according to claim 8, wherein the second obtaining module is further configured to input the training sample data to the object detection model and perform following operations to obtain the object feature map of the first remote sensing image:
performing feature extraction on the first remote sensing image to obtain a feature map of the first remote sensing image, the feature map comprising a first feature point and a first feature vector corresponding to the first feature point;
determining, based on the feature map, an object candidate bounding box corresponding to the first feature point; and
reconstructing the feature map based on the object candidate bounding box and the first feature vector to obtain the object feature map, the object feature map comprising a second feature point and a second feature vector corresponding to the second feature point that are determined based on the object candidate bounding box.

11. The apparatus according to claim 10, wherein the second obtaining module is further configured to: determine, based on the feature map, N candidate bounding boxes corresponding to the first feature point, where N is a positive integer; and obtain a candidate bounding box having a highest confidence coefficient in the N candidate bounding boxes as the object candidate bounding box.

12. The apparatus according to claim 10, wherein the feature map further comprises a third feature vector corresponding to position information of the object candidate bounding box;
the second obtaining module comprises: a reconstruction unit, configured to reconstruct the feature map based on the first feature vector and the third feature vector to obtain the object feature map;
wherein the reconstruction unit is further configured to: determine K feature vectors corresponding to the third feature vector, the second feature vector comprising the K feature vectors, where K is a positive integer greater than 1; use the first feature point as the second feature point, and replace the first feature vector in the feature map with the K feature vectors, to obtain the object feature map.

13. An object detection apparatus, comprising:
a second object detection module, configured to perform object detection on a second remote sensing image by using an object detection model trained through the method according to any one of claims 1 to 6.

14. A non-transitory computer-readable storage medium having stored thereon computer instructions, wherein the computer instructions are configured to be executed to cause a computer to implement the method according to any one of claims 1 to 6, or the method according to claim 7.

15. A computer program product, comprising a computer program, wherein the computer program is configured to be executed by a processor to implement the method according to any one of claims 1 to 6, or the method according to claim 7.
